# EUROPEAN PATENT SPECIFICATION

(11) **EP 2 955 374 B1**
(45) Date of publication and mention of the grant of the patent: **20.03.2019**
(21) Application number: 15167156.7
(22) Date of filing: 11.05.2015
(51) Int. Cl.: F04B 17/02, F04B 1/04, F04B 1/053, F03C 1/30, F03C 1/053

(54) **RADIAL-PISTON HYDRAULIC MACHINE AND WIND TURBINE POWER GENERATING APPARATUS**
RADIALKOLBENHYDRAULIKMASCHINE UND WINDTURBINENSTROMERZEUGUNGSVORRICHTUNG
MACHINE HYDRAULIQUE À PISTONS RADIAUX ET APPAREIL DE GÉNÉRATION D'ÉNERGIE ÉOLIENNE

(30) Priority: 13.06.2014 JP 2014122157
(43) Date of publication of application: 16.12.2015
(73) Proprietor: MITSUBISHI HEAVY INDUSTRIES, LTD., Tokyo 108-8215 (JP)
(72) Inventor: Yoshida, Takafumi, Tokyo, 108-8215 (JP); Uchida, Michiya, Tokyo, 108-8215 (JP); Ochiai, Hiroyasu, Tokyo, 108-8215 (JP); Takeuchi, Hiroaki, Tokyo, 108-8215 (JP); ROBERTSON, Alasdair, LOANHEAD EH 20 9TB (GB)
(74) Representative: Intès, Didier Gérard André

(56) References cited:
- WO-A2-2011/104544
- WO-A2-2013/080399
- DE-A1-102010 041 178
- GB-A- 2 484 888
- US-A1- 2011 073 078

## Description

### TECHNICAL FIELD

The present disclosure relates to a radial-piston hydraulic machine including a plurality of radially arranged pistons, and a wind turbine power generating apparatus.

### BACKGROUND

A radial-piston hydraulic machine generally includes pistons which reciprocate inside cylinders, rollers mounted to the pitons, and a cam including a cam surface which contacts the rollers. The rollers are mounted to the pistons so as to be capable of rolling while contacting the cam surface. For instance, Patent Document 1 discloses a configuration in which each piston includes a recess formed along the surface a roller, and the roller is housed in each recess so as to be capable of rolling. Here, mode of motion is converted between rotational motion of the cam and reciprocating motion of the pistons reciprocating along cylinders with the rollers rolling on a surface of cam.

Meanwhile, the rollers rolling on the cam surface may be displaced in the axial direction due to various causes such as side force received from the cam. For instance, the cylindricity of a roller may be low due to fabrication tolerance or the like. In this case, the circumferential velocity is varied between the opposite ends of the roller, so that the roller rotates about the axis of the cylinder with the piston. Such rotation of a roller about the axis of a cylinder is referred to as skew. Skew may become noticeable due to slip between a cam and a cylinder, structural deformation, vibration or the like, besides the above described fabrication tolerance. If the roller receives force from the cam surface while skewing, the roller slips sideways in the thrust direction (width direction of the roller), which causes axial displacement of the roller.

To smoothly operate a radial-piston hydraulic machine regardless of the axial displacement of the roller, it is desirable to hold the rollers centrally in the width direction of the cam surface. In this regard, from the perspective of restriction of the axial displacement of the rollers, Patent Documents 2 to 4 disclose configurations in which a pair of side plates is disposed on either side of a cam surface to restrict axial displacement of rollers within a range between the pair of side plates.

### Citation List

### Patent Literature

Patent Document 1: JP2009-531596A
Patent Document 2: GB2484888A
Patent Document 3: GB2484889A
Patent Document 4: GB 2484890A
   WO 2011/104544 discloses a radial-piston hydraulic machine with the features of the preamble of claim 1. DE 10 210 041178 discloses another example of a variable displacement radial piston fluid working machine.

### SUMMARY

### Technical Problem

If side plates are disposed on the opposite sides of a cam surface to restrict axial displacement of rollers as in Patent Documents 2 to 4, it would be possible to restrict the axial displacement of the rollers. However, the weight of the radial-piston hydraulic machine may be increased. Further, the side plates described in Patent Documents 2 to 4 protrude in the radial direction of the hydraulic machine from the cam toward the pistons. Thus, the thrust force from the rollers generates a moment that is applied to the side plates about an attachment part at which the side plates is attached to the cam. If this moment is large, the side plates or the attachment part of the side plates may become broken due to unbearable thrust force from the rollers. If the side plates are formed to have high rigidity to be capable of bearing the moment in order to prevent such breakage of the side plates, the side plates would be thick, which results in an increase in the weight and the need to use an expensive material.

In view of the above issues, an object of at least some embodiments of the present invention is to provide a radial-piston hydraulic machine whereby it is possible to prevent breakage and weight increase of a part for restricting axial displacement of rollers and to hold the rollers appropriately at the center in the width direction of a cam, and a wind turbine power generating apparatus.

A radial-piston hydraulic machine, as defined in claim 1, includes: a plurality of pistons arranged in a radial direction of the hydraulic machine; a plurality of cylinders each configured to guide corresponding one of the pistons; a plurality of rollers each disposed rotatably on corresponding one of the pistons; at least one cam configured to contact the plurality of rollers and to be rotatable about a center axis of the hydraulic machine; and a side plate mounted to a rotary part of the hydraulic machine which includes the at least one cam and rotates with the at least one cam about the center axis, the side plate extending in the radial direction from the at least one cam toward the pistons.

Each piston is configured to reciprocate in accordance with cyclic change between a high pressure and a low pressure of a pressure in a hydraulic chamber formed by the piston and corresponding one of the cylinders.

The at least one cam includes a working surface configured to be contacted by the rollers when the pressure in the respective hydraulic chambers is the high pressure and a breathing surface configured to be contacted by the rollers when the pressure in the respective hydraulic chambers is the low pressure.

The side plate is configured to contact end surfaces of the rollers only in a region surrounded by a cam surface of the at least one cam and a curve spaced away from the cam surface by a radius of the rollers, at least in a range in a circumferential direction of the hydraulic machine which corresponds to the working surface.

Generally, in a radial-piston hydraulic machine, a load may be applied to a roller in the thrust direction (this load is referred to as thrust force hereinafter) due to skew of the roller. This thrust force is normally larger on a working surface than on a breathing surface of a cam. In view of this, in the above radial-piston hydraulic machine, the side plate contacts the end surfaces of the rollers only in a region surrounded by the cam surface of the at least one cam and the curve spaced away from the cam surface by the radius of the rollers, at least in the range in the circumferential direction of the hydraulic machine which corresponds to the working surface. In this way, it is possible to reduce the moment applied to the side plate about a side plate attachment part, as compared to a case in which the side plate contacts the end surfaces of the rollers closer to the pistons than the region surrounded by the cam surface and the curve is. Thus, it is possible to restrict damage to the side plate due to the thrust force of the rollers and to improve durability of the side plate.

In some embodiments, the side plate and the end surface of each roller have shapes such that the side plate and the end surface contact each other at a point, or at a line in the radial direction.

While the side plate rotates about the center axis of the hydraulic machine with the cam, each roller rotates about the rotational center of the roller. Thus, the moving direction of the side plate is not completely identical to that of the end surface of each roller, which may result in slide (friction) between the side plate and the end surfaces of the rollers if the side plate is in contact with the end surfaces of the rollers over a wide range in the circumferential direction of the hydraulic machine.

In this regard, in the above embodiment, the slide (friction) between the side plate and the end surfaces of the rollers hardly occurs because the side plate and the end surface of each roller contact each other at a point or at a line in the radial direction of the hydraulic machine, and therefore the contact range between the side plate and the end surface of each roller is narrow in the circumferential direction of the hydraulic machine.

For instance, in a case where the end surface of each roller has such a shape that the side plate and the end surface of the roller are in contact at a point, the end surface of the roller contacts the side plate so that the roller rolls but hardly slides when the roller rotates with respect to the cam. Similarly, in a case where the end surface of each roller has such a shape that the side plate and the end surface of the roller are in contact at a line in the radial direction of the hydraulic machine (radial direction of the cam), the side plate and the end surface of the roller contact each other at a single position in the moving direction of the roller, so that the roller rolls but hardly slides. As described above, according to the above embodiment, the width of the contact area between the side plate and the end surface of each roller in the circumferential direction of the hydraulic machine is extremely short, which makes it possible to restrict friction between the side plate and the end surface of each roller and thus to prevent galling seizure.

Further, in a case where the end surface of each roller has a shape such that the side plate contacts the end surface of the roller at a line in the radial direction of the hydraulic machine (radial direction of the cam), a wedge-shaped narrow gap is formed in the vicinity of the contact part between the end surface of the roller and the side plate, which makes it possible to form an oil film with oil introduced into the wedge-shaped gap by rotation of the roller. In this way, it is possible to further restrict the friction between the end surface of the roller and the side plate, which makes it possible to effectively prevent galling seizure.

In some embodiments, a wall surface of the side plate which is adjacent to the rollers is inclined from a plane orthogonal to the center axis so as to include a first circumferential edge and a second circumferential edge which is closer to the at least one cam than the first circumferential edge is in the radial direction. The second circumferential edge is disposed closer to the rollers than the first circumferential edge is.

In this way, with the wall surface of the side plate adjacent to the rollers is inclined, which makes it easier to form a contact area of the side plate and the end surfaces of the rollers on the cam, which results in improvement of manufacturability. Further, the side plate and the end surface of each roller contact each other at a point or at a line in the radial direction of the hydraulic machine, which makes it possible to restrict friction between the end surface of the roller and the side plate, and to prevent galling seizure.

In one embodiment, an inclination angle of the wall surface from the plane orthogonal to the center axis is in a range from not less than 0.1 degree to not more than 1.0 degree.

In this way, it is possible to form the inclination while maintaining the strength of the side plate.

In some embodiments, a rim portion of the end surface of each roller is formed to have a curvature, and the radius of the curvature of the rim portion is larger than a radius of the roller.

In this way, with the rim portion of the end surface of each roller having a curve, it is possible to prevent generation of high surface pressure between the end portion of the roller and the cam surface due to an edge effect.

In one embodiment, the radius of the curvature of each rim portion is not less than ten times and not more than 500 times as large as the radius of the roller.

The side plate includes: a side-plate body including a base end portion fastened to an end surface of the at least one cam and a distal end portion protruding in the radial direction from the at least one cam toward the pistons; and a contact portion disposed on the distal end portion of the side-plate body.

The contact portion is configured to contact the end surface of each roller in the region which is closer to the at least one cam than a rotational center of the roller is.

As described above, attaching the base end portion of the side-plate body to the end surface of the cam contacting the rollers makes it possible to dispose a side-plate attachment part closer to a section of the side plate that receives the thrust force from the end surfaces of the rollers, which makes it possible to further reduce the moment applied to the side plate about the side-plate attachment part.

Further, since the side plate is fastened to the end surface of the cam via the base end portion, it is possible to simplify the fastening structure of the side plate. Further, it is also possible to form a cam and a side plate as an assembly, which makes it possible to improve the assembly performance of the cam and the side plate.

The contact portion is a wear-resistant resin member attached to the distal end portion of the side-plate body.

In this way, it is possible to restrict wear of the contact portion caused by contact with the end surfaces of the rollers, which makes it possible to improve durability of the side plate. Further, the side-plate body and the contact portion may be formed from different materials, in case of which the material cost can be also reduced.

In some embodiments, the side plate is configured to contact the end surface of each roller at a position where a distance in the radial direction between the side plate and the cam surface of the at least one cam on which the roller is configured to roll is not more than 30% of a diameter of the roller.

In this way, it is possible to further restrict the moment applied to the side plate, which makes it possible to further improve the durability of the side plates.

In some embodiments, the side plate is joined to the end surface of the at least one cam by bolts.

In this way, it is possible to attach the side plate to the cam easily. Further, it is possible to provide a side plate that is replaceable.

In some embodiments, the at least one cam and the side plate are each divided into a plurality of sections in a circumferential direction of the center axis, and the number of the sections of the side plate is equal to or less than the number of the sections of the at least one cam.

With the cam and the side plate each having a dividable structure, it is possible to improve manufacturability of the cam and the side plate. Further, while the number of divided sections is often determined for the cam in view of the handling performance during production, there are fewer requirements for the number of sections of the side plate, and thus the design flexibility of the dividable structure of the side plate is high. Thus, if the number of sections of the side plate is not greater than the number of sections of the cam, the side plate needs to be only mounted to a single cam, or a cam assembly in which a plurality of the cams are assembled to one another upon assembly of the hydraulic machine, which makes it possible to improve assembly performance of the cam and the side plate.

In some embodiments, the at least one cam comprises at least two rows of cams in the direction of the center axis, and the pistons and the rollers are arranged corresponding to the rows of the cams.

In this way, if the number of the pistons is the same, the larger the number of the rows of the cams and the corresponding pistons and rollers is, the smaller the number of pistons per row is. Thus, it is possible to reduce the diameter of the cam, and to reduce the size of the hydraulic machine in the radial direction. Further, it is possible to reduce vibration of the hydraulic machine during driving by differentiating the phases of the cams in the circumferential direction between the rows of the cams.

In some embodiments, the radial-piston hydraulic machine further includes: a cylinder block in which the plurality of cylinders for guiding the respective pistons is formed; a pair of tapered bearings disposed on opposite ends of the hydraulic machine and between a stationary part of the hydraulic machine including the cylinder block and the rotary part of the hydraulic machine, the pair of tapered bearings rotatably supporting the rotary part to the stationary part; and a pre-compression part for applying a preload to at least one of the pair of tapered bearings in a direction toward a center of the hydraulic machine.

The pair of tapered bearings with the above configuration mainly has the function to support the rotary part to the stationary part rotatably. At this time, applying a preload to at least one of the tapered bearings makes it possible to rightly maintain the relative position of the rotary part and the stationary part.

In some embodiments, the preload is equal to or larger than thrust force applied to the side plate from the rollers in the axial direction of the rollers.

In this way, it is possible to prevent backlash between the rotary part and the stationary part, and to prevent misalignment of the relative position of the rotary part and the stationary part due to the thrust force of the rollers caused by skew of the rollers.

In some embodiments, a wind turbine power generating apparatus according to some embodiments includes: a wind turbine rotor including at least one blade; a rotation shaft coupled to the wind turbine rotor; a hydraulic pump configured to be driven by the rotation shaft to generate pressurized oil; a hydraulic motor configured to be driven by the pressurized oil; and a generator configured to be driven by the hydraulic motor. At least one of the hydraulic pump or the hydraulic motor is the above described radial-piston hydraulic machine.

In the above wind turbine power generating apparatus, at least one of the hydraulic pump or the hydraulic motor is the above described radial-piston hydraulic machine. Thus, it is possible to hold the rollers rightly at center in the width direction of the cam, thereby enabling smooth operation of at least one of the hydraulic pump or the hydraulic motor. Furthermore, since the side plate is unlikely to become damaged, the above configuration contributes to improvement of durability of at least one of the hydraulic pump or the hydraulic motor, which enables smooth operation of the wind turbine power generating apparatus.

According to the above described embodiments of the present invention, at least in the range in the circumferential direction of the hydraulic machine corresponding to the working surface, the side plate contacts the end surfaces of the rollers only in the region surrounded by the cam surface and the curve spaced from the cam surface by the radius of the rollers. In this way, it is possible to reduce the moment applied to the side plate about the side-plate attachment part, as compared to a case in which the side plate contacts the end surfaces of the rollers closer to the pistons than the region surrounded by the cam surface and the curve is. Thus, it is possible to restrict damage to the side plate due to the thrust force of the rollers and to improve durability of the side plate, which in consequence makes it possible to hold the rollers rightly at center in the width direction of the cam, thereby enabling smooth operation of the hydraulic machine.

### BRIEF DESCRIPTION OF DRAWINGS

FIG. 1 is a diagram of a wind turbine power generating apparatus according to one embodiment.
FIG. 2 is a schematic cross-sectional view of a radial-piston hydraulic machine according to one embodiment.
FIG. 3 is a side view of a cam, a roller, and a peripheral structure thereof according to one embodiment.
FIG. 4 is a partial enlarged view of the radial-piston hydraulic machine illustrated in FIG. 2.
FIG. 5 is a diagram for describing a side plate according to one embodiment.
FIG. 6A is a side view of a configuration of a side plate according to one embodiment.
FIG. 6B is a cross-sectional view of the side plate taken along the line A-A from FIG. 6A.
FIG. 7 is a side view of a configuration of a side plate according to another embodiment.
FIG. 8 is a side view of a configuration example of a roller and a side plate according to another embodiment.
FIG. 9 is a diagram for describing a contact area of the side plate according to another embodiment.
FIG. 10 is a side view of a configuration example of a roller and a side plate according to another embodiment.
FIG. 11 is a side view of a configuration example of a roller and a side plate according to another embodiment.
FIG. 12 is a diagram of a configuration example of a side plate according to another embodiment.
FIGS. 13A-13E are diagrams for describing an assembly method of a hydraulic machine according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

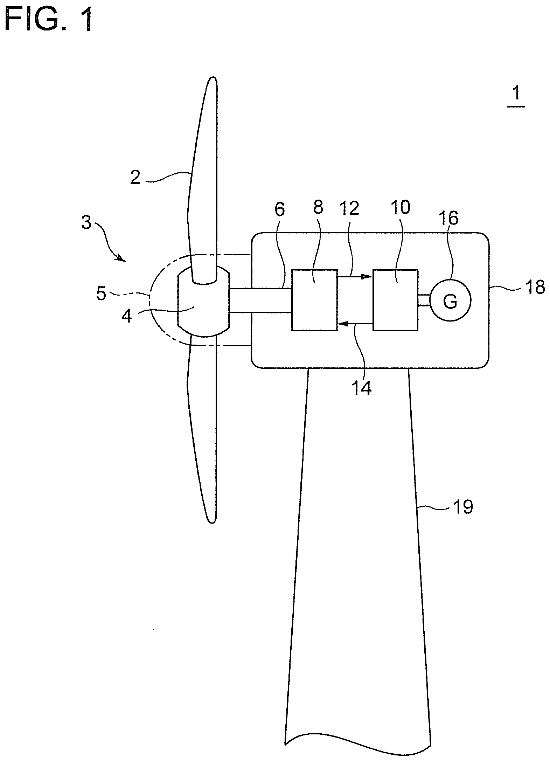

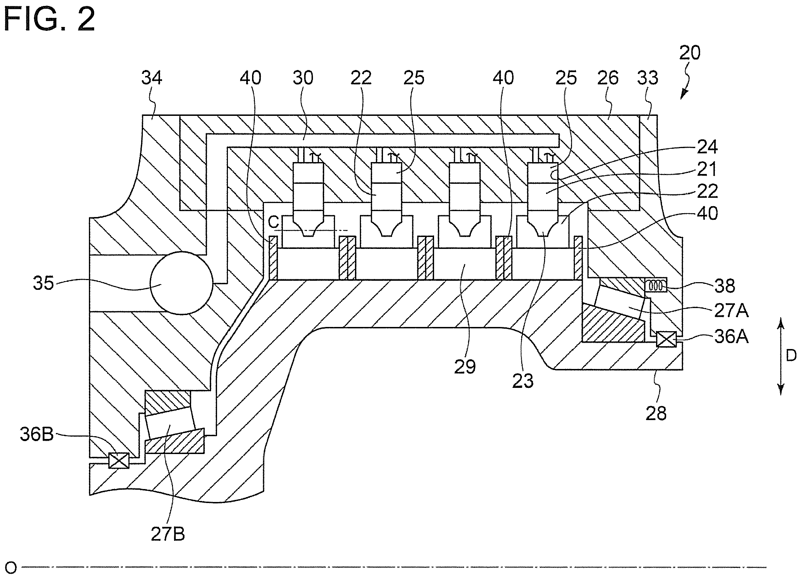

First, a wind turbine power generating apparatus 1, which is an example to which a radial-piston hydraulic machine 20 (see FIG. 2) according to the present embodiment is applied, will be described with reference to FIG. 1. Here, application of the radial-piston hydraulic machine 20 is not necessarily limited to the wind turbine power generating apparatus 1.

FIG. 1 is a diagram of a wind turbine power generating apparatus according to one embodiment.

As illustrated in the drawing, the wind turbine power generating apparatus 1 includes a rotor 3 including at least one blade 2 and a hub 4. Here, the hub 4 may be covered by a hub cover 5.

In one embodiment, a hydraulic pump 8 is coupled to the rotor 3 via a main shaft 6. A hydraulic motor 10 is connected to the hydraulic pump 8 via a high pressure oil line 12 and a low pressure oil line 14. Specifically, the outlet of the hydraulic pump 8 is connected to the inlet of the hydraulic motor 10 via the high pressure oil line 12, and the inlet of the hydraulic pump 8 is connected to the outlet of the hydraulic motor 10 via the low pressure oil line 14. The hydraulic pump 8 increases the pressure of working oil by being driven by the main shaft 6, thereby generating high pressure working oil (pressurized oil). The pressurized oil generated in the hydraulic pump 8 is supplied to the hydraulic motor 10 via the high pressure oil line 12, and then the hydraulic motor 10 is driven by the pressurized oil. The low pressure working oil having performed work in the hydraulic motor 10 is returned again to the hydraulic pump 8 via the low pressure oil line 14 disposed between the outlet of the hydraulic motor 10 and the inlet of the hydraulic pump 8.

A generator 16 is coupled to the hydraulic motor 10. In one embodiment, the generator 16 is a synchronous generator connected to a utility grid and driven by the hydraulic motor 10.

Here, at least a part of the main shaft 6 is covered by a nacelle 18 disposed on the tower 19. In one embodiment, the hydraulic pump 8, the hydraulic motor 10 and the generator 16 are disposed inside the nacelle 18.

In some embodiments, at least one of the hydraulic pump 8 or the hydraulic motor 10 is a radial-piston hydraulic machine 20 (see FIG. 2) described below.

FIG. 2 is a schematic cross-sectional view of a radial-piston hydraulic machine 20 according to one embodiment.

In the exemplary embodiment illustrated in FIG. 2, the hydraulic machine 20 includes a plurality of pistons 21 arranged in a radial direction D of the hydraulic machine 20, a plurality of rollers 22 disposed rotatably on the respective pistons 21, a cam 29 configured to contact the rollers 22 and to be rotatable about the center axis O of the hydraulic machine 20, a plurality of cylinders 24 for holding the respective pistons 21 slidably, and a cylinder block 26 including the cylinders 24. Each piston 21 supports corresponding one of the rollers 22 with a support portion 23 so that the roller 22 is rotatable about the rotational center C of the roller 22. Further, each piston 21 is guided by corresponding one of the cylinders 24 to reciprocate in the radial direction D of the hydraulic machine 20 in accordance with cyclic change between a high pressure and a low pressure of the pressure of a hydraulic chamber 25 formed by the piston 21 and the cylinder 24. Specifically, when each piston 21 reciprocates in the corresponding cylinder 24, the volume of the corresponding hydraulic chamber 25 formed by the piston and the cylinder 24 cyclically changes. The reciprocating motion of the pistons 21 accompanied by such cyclic volume change of the hydraulic chambers 25 has its mode of motion converted into rotational motion of the cam 29, and vice versa.

For instance, in a case where the hydraulic machine 20 is a hydraulic pump, the rotational motion of the cam 29 rotating with a rotation shaft 28 of the hydraulic machine 20 is converted into reciprocating motion of the pistons 21, so that the cyclic volume change of the hydraulic chambers 25 occurs, and thereby the high pressure working oil (pressurized oil) is generated in the hydraulic chambers 25. In contrast, in a case where the hydraulic machine 20 is a hydraulic motor, the reciprocating motion of the pistons 21 is caused by introduction of the pressurized oil into the hydraulic chambers 25, and this reciprocating motion is converted into the rotational motion of the cam 29, which results in rotation of the rotation shaft 28 of the hydraulic machine 20 with the cam 29. Here, in a case where the hydraulic machine 20 is a hydraulic pump 8, the rotation shaft 28 may be a pump shaft configured to rotate with the main shaft 6 (see FIG. 1) of the wind turbine power generating apparatus 1.

Accordingly, thanks to the function of the cam 29, energy is converted between the rotation energy (mechanical energy) of the rotation shaft 28 of the hydraulic machine 20 and the fluid energy of the working oil, so that the hydraulic machine 20 performs the predetermined role as a hydraulic pump or a hydraulic motor.

In some embodiments, the cylinder block 26 includes at least one inner oil channel 30 that communicates with a plurality of hydraulic chambers 25. Further, in the direction of the center axis O of the hydraulic machine 20, annular end plates 33, 34 are disposed on either side of the cylinder block 26. That is, one end plate 33 is disposed on the side further from the rotor 3, and the other end plate 34, disposed on the opposite side of the cylinder block 26 from the end plate 33, is disposed on the side closer to the rotor 3. In one embodiment, a plurality of inner oil channels 30 is disposed in the direction of the center axis O of the hydraulic machine 20, and annular collective channels 35 communicating with the respective inner oil channels 30 is disposed inside the end plate 34. The annular collective channels 35 inside the end plate 34 are each connected to an outside pipe (not illustrated). In this way, each hydraulic chamber 25 communicates with the outside pipe via the corresponding inner oil channel 30 and annular collective channel 35. Here, FIG. 2 illustrates only one inner oil channel 30 and one annular collective channel 35 as an example.

In the present embodiment, a section of the hydraulic machine 20 that includes the cylinder block 26 is referred to as a stationary part, and a section of the hydraulic machine 20 that includes the rotation shaft 28 and the cam 29 and rotates relatively to the stationary part about the center axis O is referred to as a rotary part.

In one embodiment, a pair of bearings 27A, 27B is disposed on either end of the hydraulic machine 20. The pair or bearings 27A, 27B is disposed between the stationary part and the rotary part of the hydraulic machine 20, and supports the rotary part to the stationary part rotatably. Specifically, the pair of bearings 27A, 27B is disposed between the rotation shaft 28 and the respective end plates 33, 34. In this case, in the direction of the center axis O of the hydraulic machine 20, the pair of bearings 27A, 27B is disposed on either side of the cam 29, with the bearing 27A disposed on the side farther from the rotor 3, and the other bearing 27B disposed on the side closer to the rotor 3. Further, at least one of the pair of bearings 27A, 27B may be a tapered bearing configured to receive a load in a thrust direction (direction of the center axis O of the rotation shaft 28). In this way, the end plates 33, 34 can maintain the stationary state without being affected by the rotational motion of the rotation shaft 28.

In one embodiment, the cam 29 is configured to rotate with the rotation shaft 28. The cam 29 may be a ring cam that has a corrugated cross-sectional shape and includes a cam surface 29a contacting the rollers 22 disposed on the pistons 21. Further, there may be provided at least two rows of cams 29 in the direction of the center axis O of the hydraulic machine 20, with the pistons 21 and the rollers 22 arranged corresponding to the rows of the cams 29. In this way, if the number of the pistons is the same, the larger the number of the rows of the cams 29 and the corresponding pistons 21 and rollers 22 is, the smaller the number of pistons per row is. As a result, it is possible to reduce the size of the hydraulic machine 20 in the radial direction D. Further, it is possible to reduce vibration of the hydraulic machine 20 during driving by differentiating the phases of the cams 29 in the circumferential direction between the rows of the cams 29.

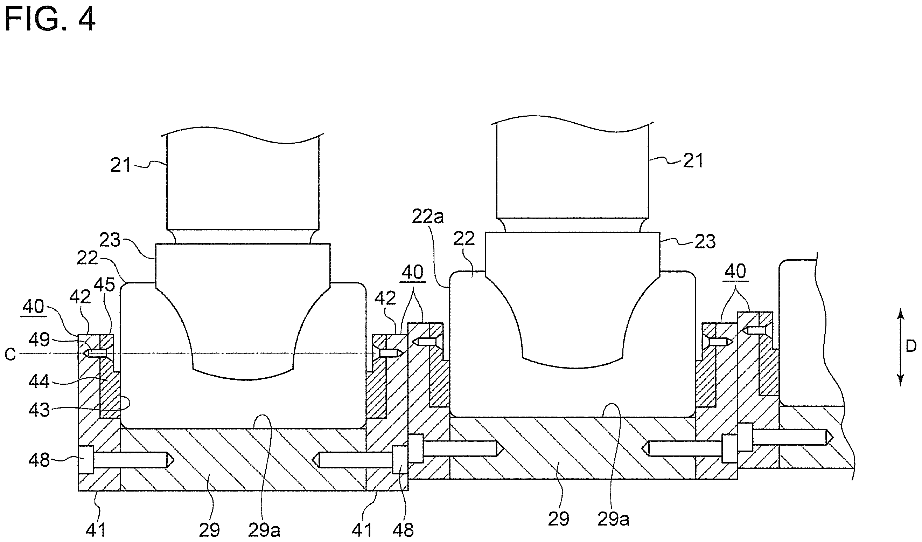

Now, with reference to FIG. 3, the surface of the cam 29 (cam surface 29a) will be described. FIG. 3 is a side view of the cam 29, one of the rollers 22, and a peripheral structure thereof according to one embodiment. The cam 29 includes a working surface 29a1 and a breathing surface 29b2. The roller 22 contacts the working surface 29a1 when the pressure in the hydraulic chamber 25 becomes high. The roller 22 contacts the breathing surface 29a2 when the pressure in the hydraulic chamber 25 becomes low.

In a case where the hydraulic machine 20 is a hydraulic pump, the piston 21 is basically moving from the bottom dead center toward the top dead center when the roller 22 is on the working surface 29a1 of the cam surface 29a, and the pressure of the working oil in the hydraulic chamber 25 is high. On the other hand, the piston 21 is basically moving from the top dead center toward the bottom dead center when the roller 22 is on the breathing surface 29a2 of the cam surface 29, and the pressure of the working oil in the hydraulic chamber 25 is low. Here, in a case where the hydraulic machine 20 is a hydraulic pump, the working surface 29a1 is basically a region of the cam surface 29 at the downstream side, in the cam rotational direction, of the top point P₁, and the breathing surface 29a2 is a region of the cam surface 29 at the upstream side, in the cam rotation direction, of the top point P₁, as illustrated in FIG. 3. For instance, the working surface 29a1 is a region of the cam surface 29 from the top point P₁ to the bottom point P₂ at the downstream side in the cam rotational direction, and the breathing surface 29a2 is a region of the cam surface 29a from the top point P₁ to the bottom point P₂ at the upstream side in the cam rotational direction. Here, the top point P₁ of the cam surface 29 is a farthermost position on the cam surface 29a in the radial direction from the center axis O (see FIG. 2) of the hydraulic machine 20, which is the maximum diameter point. Further, the bottom point P₂ is a closest position on the cam surface 29a in the radial direction D from the center axis O (see FIG. 2) of the hydraulic machine 20, which is the minimum diameter point.

On the other hand, in a case where the hydraulic machine 20 is a hydraulic motor, the piston 21 is basically moving from the top dead center toward the bottom dead center when the roller 22 is on the working surface 29a1 of the cam surface 29a, and the pressure of the working oil in the hydraulic chamber 25 is high. On the other hand, the piston 21 is basically moving from the bottom dead center toward the top dead center when the roller 22 is on the breathing surface 29a2 of the cam surface 29, and the pressure of the working oil in the hydraulic chamber 25 is low. Here, in a case where the hydraulic machine 20 is a hydraulic motor, the working surface 29a1 is basically a region of the cam surface 29 at the upstream side, in the cam rotational direction, of the top point P₁, and the breathing surface 29a2 is a region of the cam surface 29 at the downstream side, in the cam rotation direction, of the top point P₁. For instance, the working surface 29a1 is a region of the cam surface 29 from the top point P₁ to the bottom point P₂ at the downstream side in the cam rotational direction, and the breathing surface 29a2 is a region of the cam surface 29a from the top point P₁ to the bottom point P₂ at the downstream side in the cam rotational direction.

However, the positions of the transition points P₃, P₄ between the working surface 29a1 and the breathing surface 29a2 may vary depending on the inclination angle between the center axis of the cylinder and the radial direction D, the opening/closing timing of the low pressure valve and the high pressure valve disposed on the corresponding oil passage communicating with the hydraulic chamber 25, the shapes of the cam 29 and the roller 22, or the like.

Typically, the transition points P₃ and P₄ between the working surface 29a1 and the breathing surface 29a2 are set to be at positions on the cam surface 29a that correspond to the top dead center and the bottom dead center of the piston 21 (the top point P₁ and the bottom point P₂), or at the vicinity of the top dead center and the bottom dead center. In one embodiment, in a case where the hydraulic machine 20 is a hydraulic pump, as illustrated in FIG. 3, the transition point (starting point) P₄ on the working surface 29a1 is set at a position slightly offset toward the upstream side in the cam rotational direction from the position (bottom point P₂) on the cam surface 29a corresponding to the bottom dead center of the piston 21, and the transition point (terminating point) P₃ on the working surface 29a1 is set at a position slightly offset toward the upstream side in the cam rotational direction from the position (top point P₁) on the cam surface 29a corresponding to the top dead center of the piston 21.

In the radial-piston hydraulic machine 20 with the above configuration, the roller 22 may be displaced in the axial direction (the width direction of the roller) due to various causes such as side force received from the cam 29. For instance, fabrication tolerance, slip between the cam 29 and the roller 22, structural deformation, vibration or the like may cause skew, in which the roller 22 rotates about the axis of the cylinder 24. If the roller 22 receives force from the cam surface 29a while skewing, the roller 22 slips sideways in the thrust direction (in the direction of the rotational center C of the roller 22), which causes axial displacement of the roller. Thus, the radial-piston hydraulic machine 20 of the present embodiment includes a side plate 40 disposed on the rotary part of the hydraulic machine 20 to prevent axial displacement of the rollers 22.

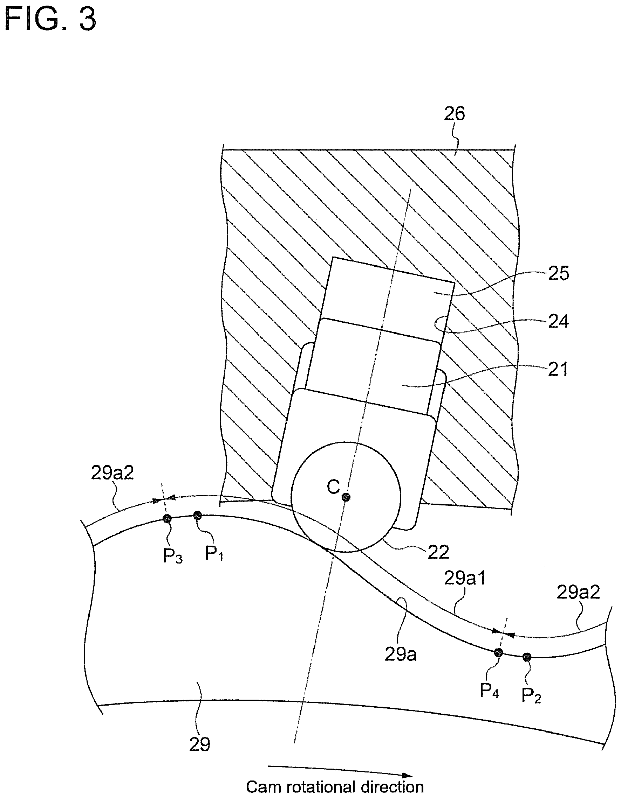

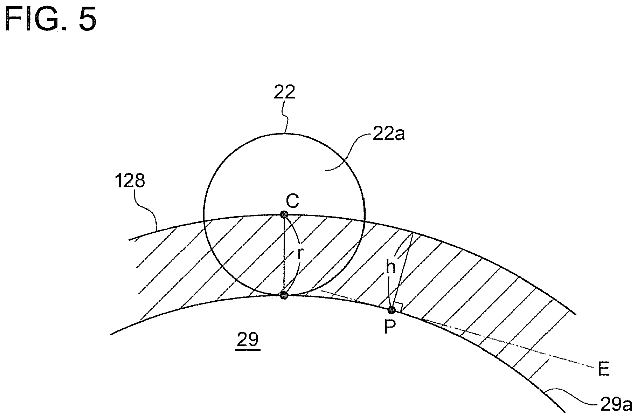

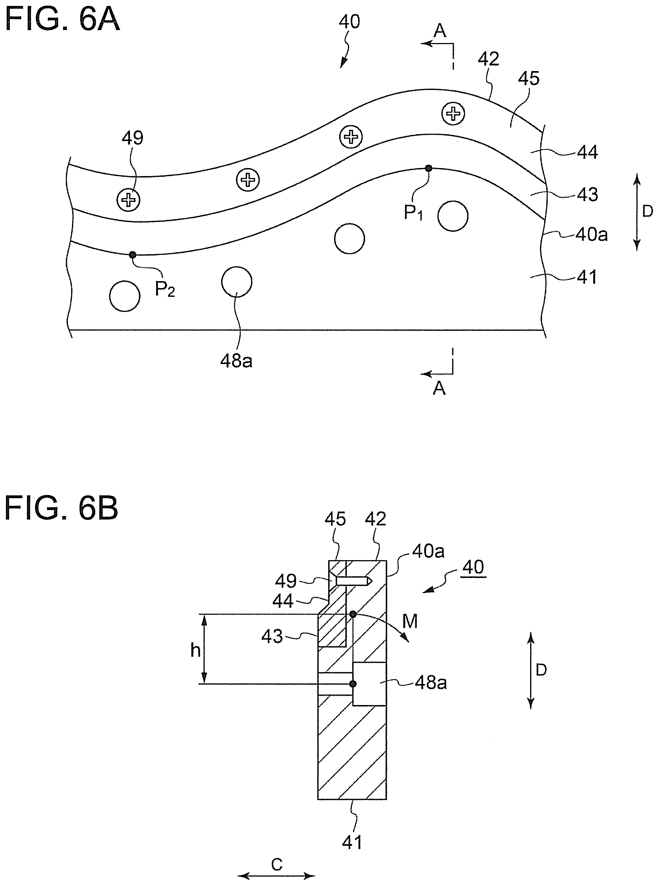

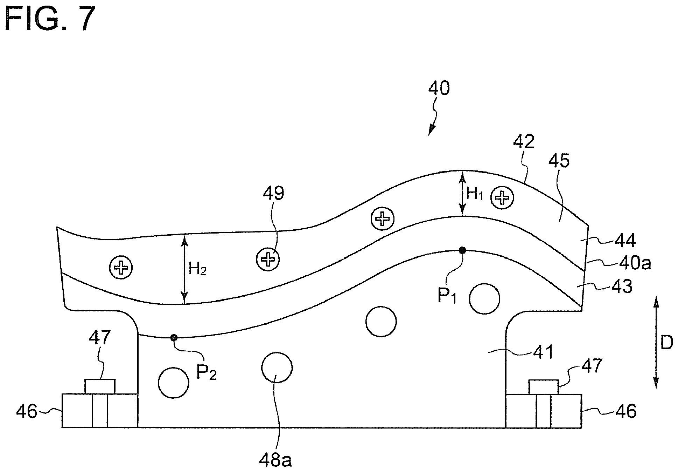

Now, the side plate 40 and the peripheral structure will be described in detail with reference to FIGs. 2, 4, and 7. FIG. 4 is a partial enlarged view of the radial-piston hydraulic machine illustrated in FIG. 2. FIG. 5 is a diagram for describing a side plate according to one embodiment. FIG. 6A is a side view of a configuration of a side plate according to one embodiment. FIG. 6B is a cross-sectional view of the side plate taken along the line A-A from FIG. 6A. FIG. 7 is a side view of a configuration example of a side plate according to another embodiment.

As illustrated in FIGs. 2 and 4, in some embodiments, each side plate 40 is mounted to the rotary part of the hydraulic machine 20 so as to extend in the radial direction D from the cam 29 toward the pistons 21. The side plate 40 is configured to rotate with the rotary part relatively to the stationary part.

In one embodiment, as illustrated in FIG. 5, the side plate 40 contacts an end surface 22a of the roller 22 only in a region (shaded region in FIG. 5) surrounded by the cam surface 29a and a curve 128 spaced from the cam surface 29a by a radius "r" of the roller 22, at least in a circumferential range of the hydraulic machine 20 that corresponds to the working surface 29a1 (see FIG. 3). In other words, the side plate 40 has a height "h" that is not greater than the radius "r" of the roller 22, at least in a circumferential range of the hydraulic machine 20 that corresponds to the working surface 29a1 (see FIG. 3). It will be understood that the above configuration of the side plates 40 may be applied not only to the working surface 29a1 but also to the breathing surface 29a2. Here, the height "h" of the side plate 40 is the length of the side plate 40 in a direction perpendicular to the tangent line E at an optional point P on the cam surface 29a.

Generally, in the hydraulic machine 20, skew of the roller 22 may generate a load in the thrust direction (hereinafter, referred to as thrust force) that is applied to the roller 22. This thrust force is normally larger on the working surface 29a1 than on the breathing surface 29a2 of the cam. In view of this, in the above hydraulic machine 20, the side plate 40 contacts the end surface 22a of the roller 22 only in a region surrounded by the cam surface 29a and the curve 128 spaced from the cam surface 29a by the radius "r" of the roller 22, at least in the range in the circumferential direction of the hydraulic machine 20 that corresponds to the working surface 29a1, which makes it possible to reduce a moment applied to the side plate 40 about a side-plate attachment part as compared to a case where the end surface 22a of the roller 22 and the side plate 40 contact each other at a position closer to the piston 21 than the region surrounded by the cam surface 29a and the curve 128 is. Thus, it is possible to restrict damage to the side plate 40 caused by the thrust force of the roller, and to improve durability of the side plate.

Further, the side plate 40 may contact the end surface 22a of the roller 22 at a position where the distance in the radial direction from the cam surface 29a, which is the height "h" of the side plate 40, is not greater than 30% of the diameter of the roller 22. In this way, it is possible to further restrict the moment applied to the side plates 40, which makes it possible to further improve the durability of the side plates 40.

The specific configuration example of the side plate 40 is as follows. As illustrated in FIGs. 6A, 6B and 7, the side plate 40 includes a side-plate body 40a including a base end portion 41 fastened to the end surface of the cam 29 and a distal end portion 42 protruding in the radial direction D from the cam 29 toward the pistons 21, and a contact portion 43 disposed on the distal end portion of the side-plate body 40a. As illustrated in FIG. 4, each side plate 40 is configured such that the contact portion 43 contacts the end surface 22a of each roller 22 in a region closer to the cam 29 than the rotational center C of the roller 22 is, of the end surface 22a of the roller 22. Bolt holes 48a are formed on the base end portion 41 of the side plate 40, and the bolts 48 inserted through the bolt holes 48a attach and fix the side plate 40 to the cam 29. As described above, attaching the base end portion 41 of the side-plate body 40a to the end surface of the cam 29 contacting the rollers 22 makes it possible to dispose the side-plate attachment part (bolts 48) closer to a section of the side plate 40 that receives the thrust force from the end surface 22a of the roller 22, which makes it possible to further reduce the moment applied to the side plate 40 about the side-plate attachment part. Further, since the side plate 40 is fastened to the cam end surface via the base end portion 41, it is possible to simplify the fastening structure of the side plate 40. Further, it is also possible to from the cam 29 and the side plate 40 as an assembly, which makes it possible to improve the assembly performance of the cam 29 and the side plate 40.

In the above side plate 40, the contact portion 43 may be a resin member 45 having wear-resistant property attached to the distal end portion 42 of the side-plate body 40a. In this way, it is possible to restrict wear of the contact portion 43 caused by contact with the end surface 22a of the roller 22, which makes it possible to improve durability of the side plate 40. Further, the side-plate body 40a and the contact portion 43 may be formed from different materials, in case of which the material cost can be also reduced.

Further, in the above side plate 40, the contact portion 43 may be disposed at a position offset toward the base end portion 41 of the distal end portion 42 of the side-plate body 40a. That is, as illustrated in FIGs. 6A, 6B, and 7, a stepped portion 44 is disposed on a farthermost region of the distal end portion 42 from the cam 29, and the contact portion 43 is disposed on a region of the distal end portion 42 closer to the base end portion 41 than the stepped portion 44 is. The stepped portion 44 is recessed in a direction away from the cam surface 29a in the direction of the rotational center C of the roller 22, so that the stepped portion 44 does not contact the end surface 22a of the roller 22. The resin member 45 may be attached to the side-plate body 40a by bolts 49 at the stepped portion 44. In this way, it is possible to prevent the heads of the bolts 49 from contacting the end surface 22a of the roller 22, and to dispose the contact portion 43 closer toward the cam surface 29a, which makes it possible to further reduce the moment M applied to the side plate 40.

In the example illustrated in FIGs. 6A and 6B, the height of the stepped portion 44 of the side plate 40 is substantially constant in the circumferential direction of the hydraulic machine 20. On the other hand, in the example illustrated in FIG. 7, the height of the stepped portion 44 of the side plate 40 is varied between the region corresponding to the top point P₁ and the region corresponding to the bottom point P₂ of the cam surface 29a1, in view of the attachment workability of the side plate 40. Specifically, the height H₂ of the stepped portion of the side plate 40 in the region corresponding to the bottom point P₂ of the cam surface 29a1 is higher than the height H₁ of the stepped portion of the side plate 40 in the region corresponding to the top point P₁ of the cam surface 29a1. In this way, it is possible to facilitate the fastening work of the bolts 49. In this case, the height of the contact portion 43 is substantially constant in the circumferential direction of the hydraulic machine 20.

Further, the cam 29 and the side plate 40 may be each divided into a plurality of sections in the circumferential direction of the center axis O, and the number of sections of the side plate 40 may be equal to or less than the number of sections of the cam 29. In a case where the side plate 40 has a dividable structure, as illustrated in FIG. 7 for instance, the respective sections of each side plate 40 are attached to the sections of the cam 29 by bolts 47 via the attachment part 46. With the cam 29 and the side plate 40 each having a dividable structure, it is possible to improve manufacturability of the cam 29 and the side plate 40. Further, while the number of divided sections is to be determined for the cam 29 in view of the handling performance during production, there are fewer requirements for the number of sections of the side plate 40, and thus the design flexibility of the dividable structure of the side plate 40 is high. Thus, with the number of sections of the side plate 40 being not greater than the number of sections of the cam 29, the side plate 40 need to be only mounted to a single cam 29, or a cam assembly in which a plurality of cams 29 are assembled to one another, upon assembly of the hydraulic machine 20, which makes it possible to improve assembly performance of the cam 29 and the side plate 40.

In some embodiments, the side plate 40 and the end surface 22a of the roller 22 have shapes such that the side plate 40 and the end surface 22a contact each other at a point, or at a line in the radial direction. In this way, the side plate 40 and the end surface 22a of the roller 22 contact each other at a point, or at a line in the radial direction D of the hydraulic machine 20, which results in a narrow contact range between the side plate and the end surface 22a of the roller 22 in the circumferential direction of the hydraulic machine 20. As a result, slide (friction) hardly occurs between the side plate 40 and the end surface 22a of the roller 22.

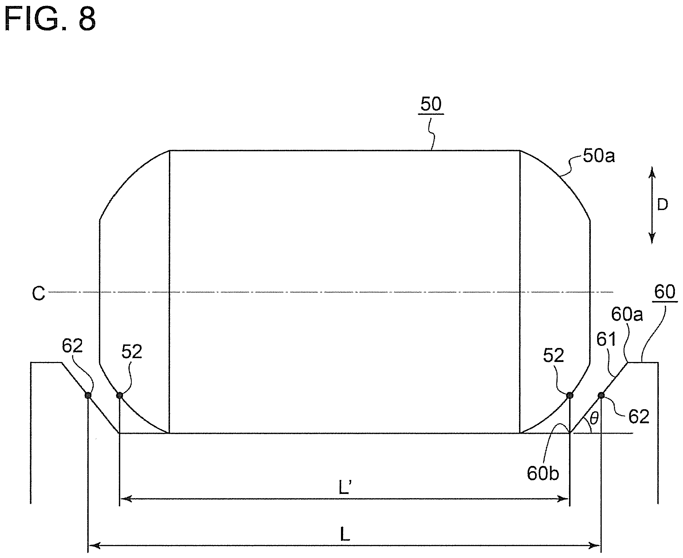

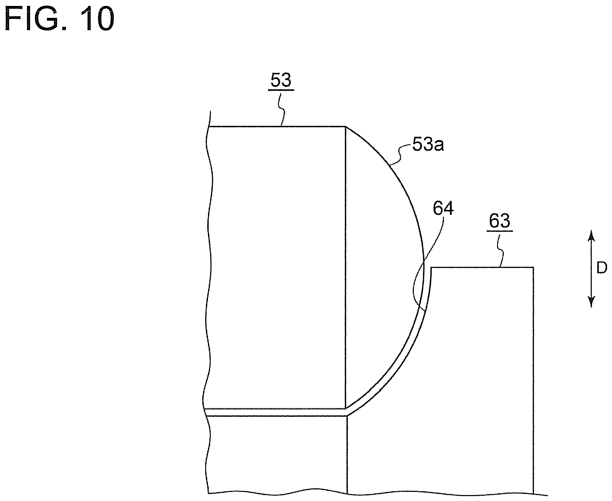

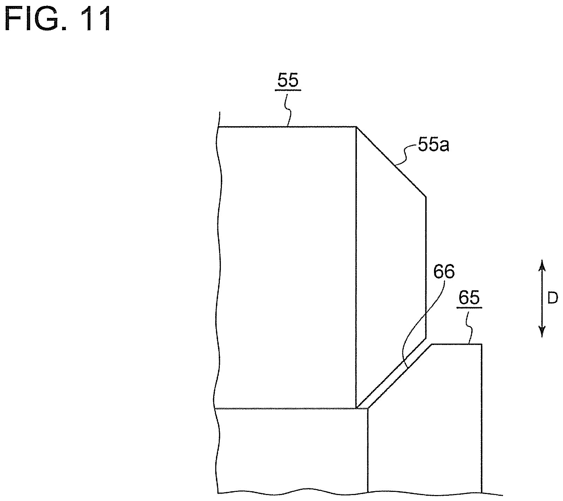

For instance, in a case where the end surface of the roller 22 has such a shape that the side plate 40 and the end surface 22a of the roller 22 are in contact at a point (for instance, the configuration in FIG. 8 described below), the end surface 22a of the roller 22 contacts the side plate 40 so that the roller 22 rolls but hardly slides when the roller 22 rotates with respect to the cam 29. Similarly, in a case where the end surface 22a of the roller 22 has such a shape that the side plate 40 contacts and the end surface 22a of the roller 22 at a line (for instance, the configuration in FIGs. 10 and 11 described below) the side plate 40 and the end surface 22a of the roller 22 contact each other at a single position in the moving direction of the roller 22, so that the roller 22 rolls but hardly slide. As described above, according to the above embodiment, the width of the contact area between the side plate 40 and the end surface 22a of the roller 22 in the circumferential direction of the hydraulic machine is extremely short, which makes it possible to restrict friction between the side plate 40 and the end surface 22a of the roller 22 and thus to prevent galling seizure.

Further, in a case where the end surface of the roller 22 has a shape such that the side plate 40 contacts the end surface 22a of the roller 22 at a line in the radial direction of the hydraulic machine 20 (radial direction of the cam), a wedge-shaped narrow gap is formed in the vicinity of the contact portion between the end surface 22a of the roller 22 and the side plate 40, which makes it possible to form an oil film with oil introduced into the wedge-shaped narrow gap by rotation of the roller 22. In this way, it is possible to further restrict the friction between the end surface 22a of the roller 22 and the side plate 40, which makes it possible to effectively prevent galling seizure.

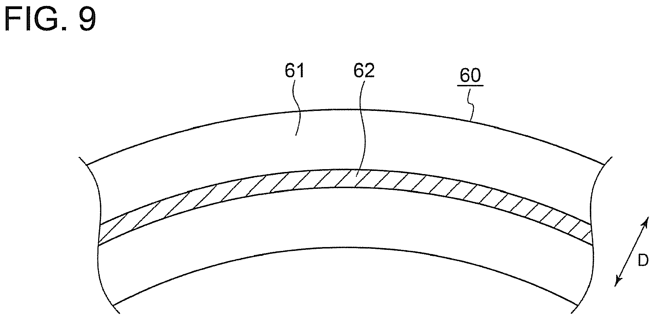

The above hydraulic machine 20 may have a configuration illustrated in FIGs. 8 to 12, specifically. Here, FIGs. 8 to 12 are other configuration examples of the side plate of the other embodiments, and the basic configuration of the side plate is identical to that of the above described side plate 40. Thus, the basic configuration will not be described in detail. In the configuration example illustrated in FIG. 8, a side plate 60 includes the first circumferential edge 60a and the second circumferential edge 60b on a wall surface 61 facing an end surface 50a of a roller 50. The second circumferential edge 60b is disposed closer to the cam 29 than the first circumferential edge 60a is in the radial direction D of the hydraulic machine 20. Further, the wall surface 61 of the side plate 60 is inclined from a plane orthogonal to the rotational center C so that the second circumferential edge 60b is positioned closer to the roller 50 than the first circumferential edge 60a is in the direction of the rotational center C of the roller 50. In this way, the wall surface 61 of the side plate 60 adjacent to the roller 50 is inclined, which makes it easier to form a contact area 62 (see FIG. 9) between the side plate 60 and the end surface 50a of the roller 50 on the cam 29, which results in improved manufacturability. Further, the side plate 60 and the end surface 50a of the roller 50 contact each other at a point or at a line in the radial direction of the hydraulic machine, which makes it possible to restrict friction between the end surface of the roller and the side plate 40, and to prevent galling seizure. At this time, the inclination angle θ of the wall surface 61 from the plane orthogonal to the rotational center C may fall within a range not less than 0.1 degree and not more than 1.0 degree. In this way, it is possible to form the inclination of the wall surface 61 while maintaining the strength of the side plate 60.

Further, a rim portion of the end surface 50a of the roller 50 may be formed to have a curvature. In this case, the curvature radius of the rim portion of the end surface 50a is larger than the radius of the roller 50. In this way, with the rim portion of the end surface 50a of the roller 50 having a curve, it is possible to prevent generation of a high surface pressure between the end portion of the roller 50 and the cam surface 29a due to an edge effect. At this time, the curvature radius of the rim portion of the side plate 40 may be not less than 10 times and not more than 500 times greater than the radius of the roller 50.

Further, in a case where the side plate 60 is disposed on either side of the roller 50, the side plates 60 may be disposed so that the distance L between contact points 52 on the opposite side plates 60 contacting the roller 50 may be greater than the distance L' between contact points 52 on the end surfaces 50a at the opposite sides of the roller 50 contacting the respective side plates 60. In this way, clearance is formed between the side plates 60 and the roller 50, so that the roller 50 smoothly rotates with respect to the cam 29.

In another configuration, as illustrated in FIGs. 10 and 11, side plates 63, 65 and end surfaces 53a, 55a of rollers 53, 55 may have shapes such that the end surfaces 53a, 55a and the side plates 63, 65 contact each other at a line in the radial direction D of the hydraulic machine 20. In the configuration example illustrated in FIG. 10, the roller 53 is formed so that the end surface 53a of the roller 53 has a curvature and protrudes toward the side plate 63. On the other hand, the side plate 63 is formed so that the wall surface 64 facing the end surface 53a of the roller 53 has a curvature along the end surface 53a of the roller 53. The curvature of the end surface 53a of the roller 53 is substantially equal to the curvature of the side plate 63. In the configuration example illustrated in FIG. 11, the rim portion of the roller 55 is inclined to have a tapered shape at so that the end surface 55a of the roller 55 protrudes toward the side plate 65. On the other hand, the wall surface 66 of the side plate 65 facing the end surface 55a of the roller 55 is inclined along the end surface 55a of the roller 55.

As in the above configuration examples, in a case where the end surfaces 53a, 55a of the rollers 53, 55 have shapes such that the side plates 63, 65 contact the end surfaces 53a, 55a of the rollers 53, 55 at a line in the radial direction D of the hydraulic machine 20, the side plate 40 contacts the end surfaces 53a, 55a of the rollers 53, 55 substantially at a single point in the moving direction of the rollers 53, 55 so that the rollers 53, 55 roll but hardly slide. With the above configuration, since the width of the contact area between the side plate 40 and the end surfaces 53a, 55a of the rollers 53, 55 in the circumferential direction of the hydraulic machine 20 is extremely short, it is possible to restrict friction between the side plate 40 and the end surfaces 53a, 55a of the rollers 53, 55 and to prevent galling seizure.

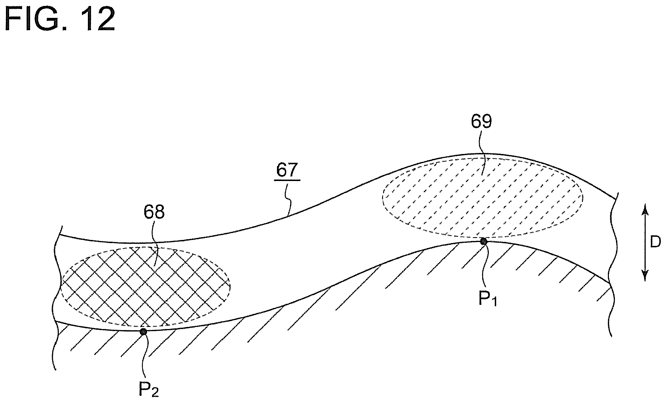

Further, as illustrated in FIG.12, for a side plate 67, the surface roughness of a contact area 68 corresponding to the bottom point P₂ of the cam surface 29 may be greater than the surface roughness of a contact area 69 corresponding to the top point P₁ of the cam surface 29. Alternatively, for the side plate 67, the surface roughness of a contact area corresponding to the working surface 29a1 of the cam surface 29 may be greater than the surface roughness of a contact area corresponding to the breathing surface 29a2 of the cam surface 29.

In one embodiment, in a case where the pair of bearings 27A, 27B included in the hydraulic machine 20 is each a tapered bearing as illustrated in FIG. 2, a spring 38 may be disposed on at least one of the bearings 27A, 27B. The spring 38 serves as a pre-compression portion for applying a preload in a direction toward the center of the hydraulic machine 20. For instance, the spring 38 is disposed on the bearing 27A disposed farther from the rotor 3. In this way, it is possible to appropriately maintain the relative position between the rotary part and the stationary part.

In this case, the preload applied by the spring 38 may be as large as or larger than the thrust force in the axial direction of the roller applied to the side plate 40 from the roller 22. In this way, it is possible to prevent backlash between the rotary part and the stationary part, and to prevent misalignment of the relative position of the rotary part and the stationary part caused by the thrust force of the roller 22 that is generated by skew of the roller 22.

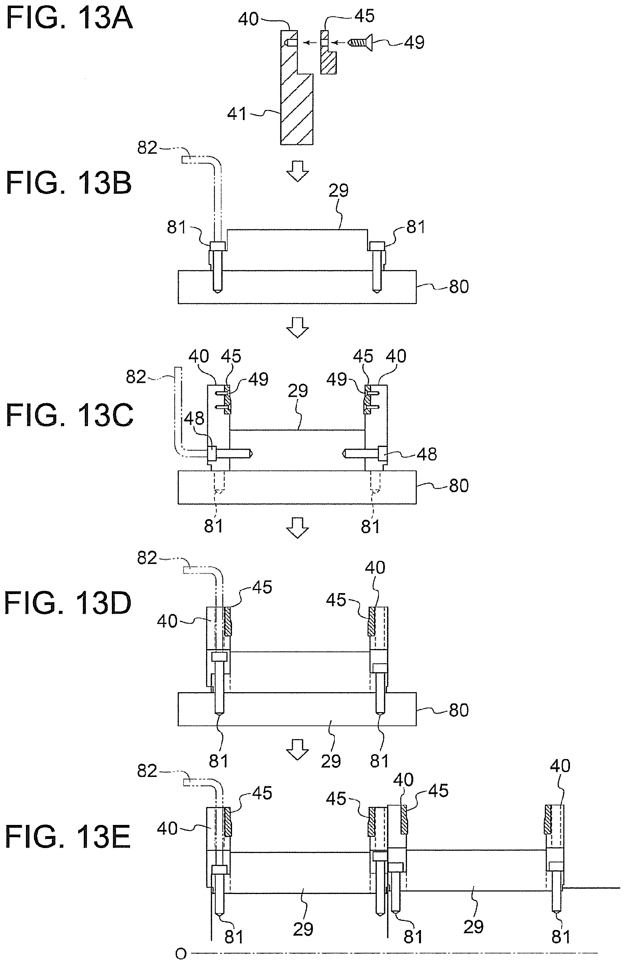

Next, with reference to FIGS. 13A-13E, the assembly method of the hydraulic machine 20 according to one embodiment will be described. FIGS. 13A-13E illustrate a process of assembling a cam assembly including a plurality of cams 29 and a plurality of side plates 40 from the assembly method of the hydraulic machine 20. Further, described below as an example is an assembling process of a cam assembly in which each cam 29 and each side plate 40 has a dividable structure.

As illustrated in FIG. 13A, first, the resin member 45 is attached to a section of each side plate 40. Bolt holes (or screw holes) are formed on each of the side plate 40 and the resin member 45, and the bolts 49 (or screws) inserted through the bolt holes 49 fix the resin member 45 on a surface of the side plate 40 that is adjacent to the cam 29. Here, the resin member 45 has a function of reducing friction of the side plate 40. Further, as illustrated in FIG. 13B, one section of the cam 29 is attached to an assembly jig 80. At this time, a tool 82 may be used to fix the cam 29 temporarily to the assembly jig 80 with bolts 81. Next, as illustrated in FIG. 13C, the side plates 40 to which the respective resin members 45 are mounted is attached to either end surface of the cam 29 temporarily fixed to the assembly jig 80. At this time, the side plates 40 may be fixed to the cam 29 with bolts 48 using the tool 82. The side plates 40 are attached to either one of the opposite sides in the width direction of the cam 29.

As illustrated in FIG. 13D, while the side plates 40 are mounted to the cam 29, the tool 82 is inserted through holes formed on the side plates 40 to remove the bolts 81, and the cam segment, which includes at least one section of the cam 29 and at least one section of the side plate mounted to the section of the cam 29, is removed from the assembly jig 80. Accordingly, a plurality of cam segments is assembled, each cam segment including at least one section of the cam 29 and at least one section of the side plate mounted to the section of the cam 29. Then, as illustrated in FIG. 13E, the plurality of cam segments is fixed to one another so that the cam segments are arranged in the direction of the center axis O of the hydraulic machine 20.

As described above, according to the above described embodiment, at least in the range in the circumferential direction of the hydraulic machine 20 corresponding to the working surface 29a1, the side plate 40 contacts the end surface 22a of each roller 22 only in the region surrounded by the cam surface 29a and the curve 128 spaced from the cam surface 29a by the radius "r" of the roller 22. In this way, it is possible to reduce the moment M about the side plate attachment part (bolts 48) applied to the side plate 40, as compared to a case in which the side plate 40 contacts the end surface 22a of the roller 22 at a position closer to the pistons 21 than the region surrounded by the cam surface 29a and the curve 128 is. Thus, it is possible to restrict damage to the side plate 40 due to the thrust force of the roller 22 and to improve durability of the side plate 40, which in consequence makes it possible to hold the roller 22 rightly at center in the width direction of the cam 29, thereby enabling smooth operation of the hydraulic machine 20.

Embodiments of the present invention were described in detail above, but the present invention is not limited thereto, and various amendments and modifications may be implemented within a scope that does not depart from the present invention. For example, more than one of the above embodiments may be suitably combined.

## Claims

1. A radial-piston hydraulic machine comprising:
a plurality of pistons (21) arranged in a radial direction of the hydraulic machine (20);
a plurality of cylinders (24) each configured to guide corresponding one of the pistons (21);
a plurality of rollers (22) each disposed rotatably on corresponding one of the pistons (21);
at least one cam (29) configured to contact the plurality of rollers (22) and to be rotatable about a center axis (O) of the hydraulic machine (20); and
a side plate (40) mounted to a rotary part of the hydraulic machine (20) which includes the at least one cam (29) and rotates with the at least one cam (29) about the center axis (O), the side plate (40) extending in the radial direction from the at least one cam (29) toward the pistons (21),
wherein each piston (21) is configured to reciprocate in accordance with cyclic change between a high pressure and a low pressure of a pressure in a hydraulic chamber (25) formed by the piston (21) and corresponding one of the cylinders (24),
wherein the at least one cam (29) includes a working surface (29a1) configured to be contacted by the rollers (22) when the pressure in the respective hydraulic chambers (25) is the high pressure and a breathing surface (29a2) configured to be contacted by the rollers (22) when the pressure in the respective hydraulic chambers is the low pressure, and
wherein the side plate (40) contacts end surfaces of the rollers (22) only in a region surrounded by a cam surface (29a) of the at least one cam (29) and a curve (128), at least in a range in a circumferential direction of the hydraulic machine (20) which corresponds to the working surface (29al), wherein
the side plate (40) includes:
a side-plate body (40a) including a base end portion (41) fastened to the end surface of the cam (29) and a distal end portion (42) protruding in the radial direction from the cam (29) toward the pistons (21);
and a contact portion (43) disposed on the distal end portion of the side-plate body (40a), wherein the contact portion (43) is configured to contact the end surfaces (22a) of the rollers (22) in the region of the end surface closer to the cam (29) than the rotational center (C) of the roller (22) is, the radial-piston hydraulic machine being **characterized in that** the curve (128) is spaced away from the cam surface (29a) by a radius (r) of the rollers (22), and **in that** the contact portion (43) is formed by a resin member (45) having wear-resistant property and attached to the distal end portion (42) of the side-plate body (40a), wherein the resin member (45) includes
a stepped portion (44) disposed on a farthermost region of the distal end portion (42) from the cam (29), and recessed in the direction of the rotational center (C) so as not to contact the end surface of the roller,
wherein the contact portion (43) is disposed on a region of the distal end portion (42) closer to the base end portion (41) than the stepped portion (44) is,
wherein the resin member (45) is fastened to the side-plate body (40a) at the stepped portion (44).

2. The radial-piston hydraulic machine according to claim 1,
wherein the side plate (40) and the end surface of each roller (22) have shapes such that the side plate (40) and the end surface contact each other at a point, or at a line in the radial direction.

3. The radial-piston hydraulic machine according to claim 1 or 2,
wherein an inclination angle (θ) of the wall surface (61) from the plane orthogonal to the center axis (O) is in a range from not less than 0.1 degree to not more than 1.0 degree.

4. The radial-piston hydraulic machine according to any one of claims 1 to 3,
wherein the radius of the curvature of each rim portion is not less than ten times and not more than 500 times as large as the radius of each roller (50).

5. The radial-piston hydraulic machine according to any one of claims 1 to 4,
wherein the side plate (40) includes:
a side-plate body (40a) including a base end portion (41) fastened to an end surface of the at least one cam (29) and a distal end portion (42) protruding in the radial direction from the at least one cam (29) toward the pistons (21); and
a contact portion (43) disposed on the distal end portion of the side-plate body (40a), and
wherein the contact portion (43) is configured to contact the end surface of each roller (22) in the region which is closer to the at least one cam (29) than a rotational center (C) of the roller (22) is.

6. The radial-piston hydraulic machine according to claim 5,
wherein the contact portion (43) is a wear-resistant resin member attached to the distal end portion of the side-plate body (40a).

7. The radial-piston hydraulic machine according to any one of claims 1 to 6,
wherein the side plate (40) is configured to contact the end surface of each roller (22) at a position where a distance in the radial direction between the side plate (40) and the cam surface (29a) of the at least one cam (29) on which the roller (22) is configured to roll is not more than 30% of a diameter of the roller (22).

8. The radial-piston hydraulic machine according to any one of claims 1 to 7,
wherein the side plate (40) is joined to the end surface of the at least one cam (29) by bolts (48).

9. The radial-piston hydraulic machine according to any one of claims 1 to 8,
wherein the at least one cam (29) and the side plate (40) are each divided into a plurality of sections in a circumferential direction of the center axis (O), and the number of the sections of the side plate (40) is equal to or less than the number of the sections of the at least one cam (29).

10. The radial-piston hydraulic machine according to any one of claims 1 to 9,
the at least one cam (29) comprises at least two rows of cams in the direction of the center axis, and
wherein the pistons (21) and the rollers (22) are arranged corresponding to the rows of the cams (29).

11. The radial-piston hydraulic machine according to any one of claims 1 to 10, further comprising:
a cylinder block (26) in which the plurality of cylinders (24) each configured to guide corresponding one of the pistons (21) is formed;
a pair of tapered bearings (27A, 27B) disposed on opposite ends of the hydraulic machine (20) and between a stationary part of the hydraulic machine (20) including the cylinder block (26) and the rotary part of the hydraulic machine (20), the pair of tapered bearings (27A, 27B) rotatably supporting the rotary part to the stationary part; and
a pre-compression part (38) for applying a preload to at least one (27A) of the pair of tapered bearings in a direction toward a center of the hydraulic machine (20).

12. The radial-piston hydraulic machine according to claim 11,
wherein the preload is equal to or larger than a thrust force applied to the side plate from the rollers (22) in the axial direction of the rollers.

13. The radial-piston hydraulic machine according to any one of claims 1 to 12,
wherein a wall surface (61) of the side plate (60) which is adjacent to the rollers is inclined from a plane orthogonal to the center axis (O) so as to include a first circumferential edge (60a) and a second circumferential edge (60b) which is closer to the at least one cam (29) than the first circumferential edge (60a) is in the radial direction, the second circumferential edge (60b) being disposed closer to the rollers (50) than the first circumferential edge (60a) is, and a rim portion of the end surface (50a) of each roller (50) is formed to have a curvature, and a radius of the curvature of the rim portion is larger than a radius of the roller (50).

14. A wind turbine power generating apparatus, comprising:
a wind turbine rotor including at least one blade (2);
a rotation shaft (6) coupled to the wind turbine rotor;
a hydraulic pump (8) configured to be driven by the rotation shaft (6) to generate pressurized oil;
a hydraulic motor (10) configured to be driven by the pressurized oil; and
a generator (16) configured to be driven by the hydraulic motor (10), and
wherein at least one of the hydraulic pump (8) or the hydraulic motor (10) is the radial-piston hydraulic machine according to any one of claims 1 to 13.

## Patentansprüche

1. Radialkolben-Hydraulikmaschine, aufweisend:
mehrere Kolben (21), die in einer radialen Richtung der Hydraulikmaschine (20) angeordnet sind;
mehrere Zylinder (24), die jeweils konfiguriert sind, um einen entsprechenden der Kolben (21) zu führen;
mehrere Walzen (22), die jeweils drehbar an einem entsprechenden der Kolben (21) angeordnet sind;
mindestens einen Nocken (29), der konfiguriert ist, um mit den mehreren Walzen (22) in Kontakt zu kommen und um eine Mittelachse (O) der Hydraulikmaschine (20) drehbar zu sein; und
eine Seitenplatte (40), die an einem Drehteil der Hydraulikmaschine (20) montiert ist, die den mindestens einen Nocken (29) umfasst und sich mit dem mindestens einen Nocken (29) um die Mittelachse (O) der Seitenplatte (40) dreht, die sich in radialer Richtung von dem mindestens einen Nocken (29) zu den Kolben (21) erstreckt,
wobei jeder Kolben (21) konfiguriert ist für ein Hin- und Herwegen entsprechend einem zyklischen Wechsel zwischen einem hohen Druck und einem niedrigen Druck von einem Druck in einer Hydraulikkammer (25), die durch den Kolben (21) und den entsprechenden Zylinder (24) gebildet wird,
wobei der mindestens eine Nocken (29) eine Arbeitsfläche (29a1) aufweist, die so konfiguriert ist, dass sie von den Walzen (22) berührt wird, wenn der Druck in den jeweiligen Hydraulikkammern (25) der hohe Druck ist, und eine Auflagefläche (29a2), die so konfiguriert ist, dass sie von den Walzen (22) berührt wird, wenn der Druck in den jeweiligen Hydraulikkammern der niedrige Druck ist, und
wobei die Seitenplatte (40) Endflächen der Walzen (22) nur in einem von einer Nockenfläche (29a) des mindestens einen Nockens (29) und einer Krümmung (128) mindestens in einem Bereich einer Umfangsrichtung der Hydraulikmaschine (20), der der Arbeitsfläche (29a1) entspricht, umgebenen Bereich berührt,
wobei die Seitenplatte (40) aufweist:
einen Seitenplattenkörper (40a), umfassend einen Basisendabschnitt (41), der an der Endfläche des Nockens (29) befestigt ist, und einen distalen Endabschnitt (42), der in der radialen Richtung von dem einen Nocken (29) in Richtung der Kolben (21) vorsteht;
und einen Kontaktabschnitt (43), der am distalen Endabschnitt des Seitenplattenkörpers (40a) angeordnet ist, wobei der Kontaktabschnitt (43) so konfiguriert ist, dass er die Endflächen (22a) der Walzen (22) in dem Bereich der Endfläche berührt, die näher am Nocken (29) liegt als die Drehmitte (C) der Walze (22),
wobei die Radialkolben-Hydraulikmaschine **dadurch gekennzeichnet ist, dass** die Krümmung (128) durch einen Radius (r) der Walzen (22) von der Nockenfläche (29a) beabstandet ist, und dass der Kontaktabschnitt (43) durch ein Harzelement (45) gebildet ist, das Verschleißfestigkeitseigenschaften aufweist und am distalen Endabschnitt (42) des Seitenplattenkörpers (40a) befestigt ist, wobei das Harzelement (45) Folgendes umfasst:
einen abgestuften Abschnitt (44), der im vom Nocken (29) entferntesten Bereich des distalen Endabschnitts (42) angeordnet und in der Richtung der Drehmitte (C) ausgespart ist, um die Endfläche der Walze nicht zu berühren,
wobei der Kontaktabschnitt (43) auf einem Bereich des distalen Endabschnitts (42) angeordnet ist, der näher am Basisendabschnitt (41) liegt als der abgestufte Abschnitt (44),
wobei das Harzelement (45) am abgestuften Abschnitt (44) am Seitenplattenkörper (40a) befestigt ist.

2. Radialkolben-Hydraulikmaschine nach Anspruch 1,
wobei die Seitenplatte (40) und die Endfläche jeder Walze (22) derart geformt sind, dass sich die Seitenplatte (40) und die Endfläche an einem Punkt oder an einer Linie in der radialen Richtung berühren.

3. Radialkolben-Hydraulikmaschine nach Anspruch 1 oder 2,
wobei ein Neigungswinkel (θ) der Wandfläche (61) von der zur Mittelachse (O) orthogonalen Ebene in einem Bereich von nicht weniger als 0,1 Grad bis nicht mehr als 1,0 Grad liegt.

4. Radialkolben-Hydraulikmaschine nach einem der Ansprüche 1 bis 3,
wobei der Krümmungsradius jedes Randabschnitts nicht weniger als das Zehnfache und nicht mehr als das 500 fache des Radius jeder Walze (50) beträgt.

5. Radialkolben-Hydraulikmaschine nach einem der Ansprüche 1 bis 4,
wobei die Seitenplatte (40) Folgendes umfasst:
einen Seitenplattenkörper (40a), aufweisend einen Basisendabschnitt (41), der an einer Endfläche des mindestens einen Nockens (29) befestigt ist und einen distalen Endabschnitt (42), der in radialer Richtung von dem mindestens einen Nocken (29) in Richtung der Kolben (21) vorsteht; und
einen Kontaktabschnitt (43), der an dem distalen Endabschnitt des Seitenplattenkörpers (40a) angeordnet ist, und
wobei der Kontaktabschnitt (43) konfiguriert ist, um die Endfläche jeder Walze (22) in dem Bereich zu berühren, der näher an dem mindestens einen Nocken (29) liegt als ein Drehmittelpunkt (C) der Walze (22).

6. Radialkolben-Hydraulikmaschine nach Anspruch 5,
wobei der Kontaktabschnitt (43) ein verschleißfestes Harzelement ist, das am distalen Endabschnitt des Seitenplattenkörpers (40a) befestigt ist.

7. Radialkolben-Hydraulikmaschine nach einem der Ansprüche 1 bis 6,
wobei die Seitenplatte (40) konfiguriert ist für ein Berühren der Endfläche jeder Walze (22) an einer Position, an der ein Abstand in der radialen Richtung zwischen der Seitenplatte (40) und der Nockenfläche (29a) des mindestens einen Nockens (29), auf dem die Walze (22) zum Rollen konfiguriert ist, nicht mehr als 30% des Durchmessers der Walze (22) beträgt.

8. Radialkolben-Hydraulikmaschine nach einem der Ansprüche 1 bis 7,
wobei die Seitenplatte (40) mit der Endfläche des mindestens einen Nockens (29) durch Schrauben (48) verbunden ist.

9. Radialkolben-Hydraulikmaschine nach einem der Ansprüche 1 bis 8,
wobei der mindestens eine Nocken (29) und die Seitenplatte (40) jeweils in mehrere Abschnitte in einer Umfangsrichtung der Mittelachse (O) unterteilt sind, und die Anzahl der Abschnitte der Seitenplatte (40) gleich groß wie oder kleiner als die Anzahl der Abschnitte des mindestens einen Nockens (29) ist

10. Radialkolben-Hydraulikmaschine nach einem der Ansprüche 1 bis 9,
wobei der mindestens eine Nocken (29) mindestens zwei Reihen von Nocken in der Richtung der Mittelachse aufweist, und
wobei die Kolben (21) und die Walzen (22) entsprechend den Reihen der Nocken (29) angeordnet sind.

11. Radialkolben-Hydraulikmaschine nach einem der Ansprüche 1 bis 10, ferner aufweisend:
einen Zylinderblock (26) ausgebildet wird, in dem die mehreren Zylinder (24) jeweils zum Führen eines entsprechenden der Kolben (21) konfiguriert sind;
ein Paar konischer Lager (27A, 27B), die an entgegengesetzten Enden der Hydraulikmaschine (20) und zwischen einem stationären Teil der Hydraulikmaschine (20), der den Zylinderblock (26) enthält, und dem Drehteil der Hydraulikmaschine (20) angeordnet sind, wobei das Paar konischer Lager (27A, 27B) den Drehteil drehbar an dem feststehenden Teil abstützt; und
einen Vorverdichtungsabschnitt (38) zum Aufbringen einer Vorlast auf mindestens einem (27A) des Paars konischer Lager in einer Richtung zu einer Mitte der Hydraulikmaschine (20).

12. Radialkolben-Hydraulikmaschine nach Anspruch 11,
wobei die Vorlast gleich groß wie oder größer als eine Schubkraft ist, die von den Walzen (22) in der axialen Richtung der Walzen auf die Seitenplatte ausgeübt wird.

13. Radialkolben-Hydraulikmaschine nach einem der Ansprüche 1 bis 12,
wobei eine Wandfläche (61) der Seitenplatte (60), die an die Walzen angrenzt, von einer zur Mittelachse (O) orthogonalen Ebene (O) geneigt ist, um eine erste Umfangskante (60a) und eine zweite Umfangskante (60b), die in der radialen Richtung näher an dem mindestens einen Nocken (29) liegt als die erste Umfangskante (60a), zu umfassen, wobei die zweite Umfangskante (60b) näher an den Walzen (50) angeordnet ist als die erste Umfangskante (60a), und ein Randabschnitt der Endfläche (50a) jeder Walze (50) ausgebildet ist, um eine Krümmung aufzuweisen, und ein Radius der Krümmung des Randabschnitts größer ist als der Radius der Walze (50).

14. Windturbinen-Stromerzeugungsvorrichtung, umfassend:
einen Windturbinenrotor, aufweisend mindestens ein Blatt (2) umfasst;
eine mit dem Windturbinenrotor gekoppelte Drehwelle (6);
eine Hydraulikpumpe (8), die so konfiguriert ist, dass sie durch die Drehwelle (6) angetrieben wird, um Drucköl zu erzeugen;
einen Hydraulikmotor (10), der konfiguriert ist, um durch das Drucköl angetrieben zu werden; und
einen Generator (16), der konfiguriert ist, um durch den Hydraulikmotor (10) angetrieben zu werden, und
wobei mindestens eine von Hydraulikpumpe (8) oder Hydraulikmotor (10) die Radialkolben-Hydraulikmaschine nach einem der Ansprüche 1 bis 13 ist.

## Revendications

1. Machine hydraulique à pistons radiaux comprenant :
une pluralité de pistons (21) agencés dans une direction radiale de la machine hydraulique (20) ;
une pluralité de cylindres (24), chacun étant configuré pour guider un piston correspondant des pistons (21) ;
une pluralité de rouleaux (22), chacun étant disposé en rotation sur le piston correspondant des pistons (21) ;
au moins une came (29) configurée pour être en contact avec la pluralité de rouleaux (22) et pour pouvoir tourner autour d'un axe central (O) de la machine hydraulique (20) ; et
une plaque latérale (40) montée sur une partie rotative de la machine hydraulique (20) qui comprend la au moins une came (29) et tourne avec la au moins une came (29) autour de l'axe central (O), la plaque latérale (40) s'étendant dans la direction radiale à partir de la au moins une came (29) vers les pistons (21),
dans laquelle chaque piston (21) est configuré pour effectuer un mouvement de va-et-vient selon un changement cyclique entre une haute pression et une basse pression d'une pression dans une chambre hydraulique (25) formée par le piston (21) et un cylindre correspondant des cylindres (24),
dans laquelle la au moins une came (29) comprend une surface de travail (29a1) configurée pour être en contact avec les rouleaux (22) lorsque la pression dans les chambres hydrauliques (25) respectives est la haute pression et une surface d'appui (29a2) configurée pour être en contact avec les rouleaux (22) lorsque la pression dans la chambre hydraulique respective est la basse pression, et
dans laquelle la plaque latérale (40) est en contact avec les surfaces d'extrémité des rouleaux (22) uniquement dans une région entourée par une surface de came (29a) de la au moins une came (29) et une courbure (128), au moins dans une plage dans une direction circonférentielle de la machine hydraulique (20) qui correspond à la surface de travail (29a1), dans laquelle :
la plaque latérale (40) comprend :
un corps de plaque latérale (40a) comprenant une partie d'extrémité de base (41) fixée sur la surface d'extrémité de la came (29) et une partie d'extrémité distale (42) faisant saillie dans la direction radiale de la came (29) vers les pistons (21) ;
et une partie de contact (43) disposée sur la partie d'extrémité distale du corps de plaque latérale (40a),
dans laquelle la partie de contact (43) est configurée pour être en contact avec les surfaces d'extrémité (22a) des rouleaux (22) dans la région de la surface d'extrémité plus proche de la came (29) que ne l'est le centre de rotation (C) du rouleau (22),
la machine hydraulique à pistons radiaux étant **caractérisée en ce que** la courbe (128) est espacée de la surface de came (29a) par un rayon (r) des rouleaux (22), et **en ce que** :
la partie de contact (43) est formée par un élément en résine (45) ayant une propriété de résistance à l'usure et fixée à la partie d'extrémité distale (42) du corps de plaque latérale (40a),
dans laquelle l'élément en résine (45) comprend :
une partie étagée (44) disposée sur la région la plus éloignée de la partie d'extrémité distale (42) de la came (29), et enfoncée dans la direction du centre de rotation (C) afin de ne pas être en contact avec la surface d'extrémité du rouleau,
dans laquelle la partie de contact (43) est disposée sur une région de la partie d'extrémité distale (42) plus à proximité de la partie d'extrémité de base (41) que ne l'est la partie étagée (44),
dans laquelle l'élément en résine (45) est fixé sur le corps de plaque latérale (40a) au niveau de la partie étagée (44) .

2. Machine hydraulique à pistons radiaux selon la revendication 1,
dans laquelle la plaque latérale (40) et la surface d'extrémité de chaque rouleau (22) ont des formes de sorte que la plaque latérale (40) et la surface d'extrémité sont en contact entre elles en un point, ou au selon une ligne dans la direction radiale.

3. Machine hydraulique à pistons radiaux selon la revendication 1 ou 2,
dans laquelle un angle d'inclinaison (θ) de la surface de paroi (61) du plan orthogonal à l'axe central (O) est dans une plage allant d'une valeur non inférieure à 0,1 degré à une valeur non supérieure à 1,0 degré.

4. Machine hydraulique à pistons radiaux selon l'une quelconque des revendications 1 à 3,
dans laquelle le rayon de courbure de chaque partie de bord n'est pas inférieur à dix fois et non supérieur à 500 fois le rayon de chaque rouleau (50).

5. Machine hydraulique à pistons radiaux selon l'une quelconque des revendications 1 à 4,
dans laquelle la plaque latérale (40) comprend :
un corps de plaque latérale (40a) comprenant une partie d'extrémité de base (41) fixée sur une surface d'extrémité de la au moins une came (29) et une partie d'extrémité distale (42) faisant saillie dans la direction radiale de la au moins une came (29) vers les pistons (21) ; et
une partie de contact (43) disposée sur la partie d'extrémité distale du corps de plaque latérale (40a), et
dans laquelle la partie de contact (43) est configurée pour être en contact avec la surface d'extrémité de chaque rouleau (22) dans la région qui est plus proche de la au moins une came (29) que ne l'est un centre de rotation (C) du rouleau (22).

6. Machine hydraulique à pistons radiaux selon la revendication 5,
dans laquelle la partie de contact (43) est un élément en résine résistant à l'usure fixé sur la partie d'extrémité distale du corps de plaque latérale (40a).

7. Machine hydraulique à pistons radiaux selon l'une quelconque des revendications 1 à 6,
dans laquelle la plaque latérale (40) est configurée pour être en contact avec la surface d'extrémité de chaque rouleau (22) dans une position dans laquelle une distance dans la direction radiale entre la plaque latérale (40) et la surface de came (29a) de la au moins une came (29) sur laquelle le rouleau (22) est configuré pour rouler, n'est pas supérieure à 30 % d'un diamètre du rouleau (22).

8. Machine hydraulique à pistons radiaux selon l'une quelconque des revendications 1 à 7,
dans laquelle la plaque latérale (40) est assemblée à la surface d'extrémité de la au moins une came (29) par des boulons (48).

9. Machine hydraulique à pistons radiaux selon l'une quelconque des revendications 1 à 8,
dans laquelle la au moins une came (29) et la plaque latérale (40) sont chacune divisées en une pluralité de sections dans une direction circonférentielle de l'axe central (O), et le nombre des sections de la plaque latérale (40) est égal ou inférieur au nombre de sections de la au moins une came (29).

10. Machine hydraulique à pistons radiaux selon l'une quelconque des revendications 1 à 9,
la au moins une came (29) comprend au moins deux rangées de cames dans la direction de l'axe central, et
dans laquelle les pistons (21) et les rouleaux (22) sont agencés de manière correspondante aux rangées de cames (29).

11. Machine hydraulique à pistons radiaux selon l'une quelconque des revendications 1 à 10, comprenant en outre :
un bloc-cylindres (26) dans lequel est formée la pluralité de cylindres (24), chacun étant configuré pour guider le piston correspondant des pistons (21) ;
une paire de paliers coniques (27a, 27b) disposés sur les extrémités opposées de la machine hydraulique (20) et entre une partie fixe de la machine hydraulique (20) comprenant le bloc-cylindres (26) et la partie rotative de la machine hydraulique (20), la paire de paliers coniques (27A, 27B) supportant, en rotation, la partie rotative sur la partie fixe ; et
une partie de pré-compression (38) pour appliquer une pré-charge sur au moins l'un (27A) de la paire de paliers coniques dans une direction vers un centre de la machine hydraulique (20).

12. Machine hydraulique à pistons radiaux selon la revendication 11,
dans laquelle la pré-charge est égale ou supérieure à une force de poussée appliquée sur la plaque latérale depuis les rouleaux (22) dans la direction axiale des rouleaux.

13. Machine hydraulique à pistons radiaux selon l'une quelconque des revendications 1 à 12,
dans laquelle une surface de paroi (61) de la plaque latérale (60) qui est adjacente aux rouleaux est inclinée à partir d'un plan orthogonal à l'axe central (O) afin d'inclure un premier bord circonférentiel (60a) et un second bord circonférentiel (60b) qui est plus près de la au moins une came (29) que le premier bord circonférentiel (60a) ne l'est dans la direction radiale, le second bord circonférentiel (60b) étant disposé plus à proximité des rouleaux (50) que ne l'est le premier bord circonférentiel (60a) et une partie de bord de la surface d'extrémité (50a) de chaque rouleau (50) est formée pour avoir une courbure, et un rayon de la courbure de la partie de bord est supérieur à un rayon du rouleau (50).

14. Appareil de génération d'énergie éolienne comprenant :
un rotor d'éolienne comprenant au moins une pale (2) ;
un arbre de rotation (6) couplé au rotor d'éolienne ;
une pompe hydraulique (8) configurée pour être entraînée par l'arbre de rotation (6) afin de générer de l'huile sous pression ;
un moteur hydraulique (10) configuré pour être entraîné par l'huile sous pression ; et
un générateur (16) configuré pour être entraîné par le moteur hydraulique (10), et
dans lequel au moins l'un parmi la pompe hydraulique (8) ou le moteur hydraulique (10) est la machine hydraulique à pistons radiaux selon l'une quelconque des revendications 1 à 13.
